# NEUE EUROPÄISCHE PATENTSCHRIFT

(11) **EP 0 212 073 B2**
(45) Veröffentlichungstag und Bekanntmachung des Hinweises auf die Entscheidung über den Einspruch: **07.04.1993**
(45) Hinweis auf die Patenterteilung: 20.09.1989
(21) Anmeldenummer: 86106566.2
(22) Anmeldetag: 14.05.1986
(51) Int. Cl.: C22C 11/02, C22C 11/06, H01M 4/68

(54) **Elektrodengitter aus einer Blei-Calcium-Legierung und Verfahren zur Herstellung desselben**
Electrode grid of a lead-calcium alloy and process for its manufacture
Grille d'électrode d'alliage plomb-calcium et procédé pour sa fabrication

(30) Priorität: 20.06.1985 DE 3522033
(43) Veröffentlichungstag der Anmeldung: 04.03.1987
(73) Patentinhaber: ACCUMULATORENFABRIK SONNENSCHEIN GMBH, D-63654 Büdingen (DE)
(72) Erfinder: Reif, Winfried, Dr. Ing.prof., D-1000 Berlin 12 (DE); Abdel Reihim, Magdy, Dr.Ing., D-6470 Büdingen 1 (DE); Schuler, Andreas, Dipl.Ing., D-1000 Berlin 12 (DE)
(74) Vertreter: Baumann, Eduard, Dipl.-Phys.

(56) Entgegenhaltungen:
- EP-A- 0 213 203
- DE-C- 709 337
- ES-A- 407 350
- US-A- 4 228 580
- US-A- 4 279 977
- CHEMICAL ABSTRACTS, Band 103, Nr. 22, 2. Dezember 1985, Seite 254, Zusammenfassung Nr. 182111n, Columbus, Ohio, US; M. ABDEL-REIHIM et al.: "Effect of casting parameters and additives on the structure of the alloy PbCa0.08Sn1.0 (battery grid material)", & METALL (BERLIN) 1985, 39(8), 715-20
- CHEMICAL ABSTRACTS, Band 94, Nr. 18, 4. Mai 1981, Seite 279, Zusammenfassung Nr. 143999j, Columbus, Ohio, US; & JP-A-81 05 938 (SHIN-KOBE ELECTRIC MACHINERY CO. LTD.) 22-01-1981
- CHEMICAL ABSTRACTS, Band 93, Nr. 8, 25. August 1980, Seite 242, Zusammenfassung Nr. 75797u, Columbus, Ohio, US; & JP-A-80 41 968 (JAPAN STORAGE BATTERY CO. LTD.) 25-03-1980
- CHEMICAL ABSTRACTS, Band 87, Nr. 6, 8. August 1977, Seite 143, Zusammenfassung Nr. 41798f, Columbus, Ohio, US; & JP-A-77 16 636 (JAPAN STORAGE BATTERY CO. LTD.) 08-02-1977
- CHEMICAL ABSTRACTS, Band 100, Nr. 10, 5. März 1984, Seite 269, Zusammenfassung Nr. 72668e, Columbus, Ohio, US; & JP-A-58 185 739 (FURUKAWA BATTERY CO. LTD. & FURUKAWA ELECTRIC CO. LTD.) 29-10-1983
- W. HOFMANN: "Blei und Bleilegierungen", 2. Auflage, 1962, Seite 350, Springer-Verlag, Berlin, DE;
- ZEITSCHRIFT FÜR METALLKUNDE, Band 70, Nr. 12, 1979, Seiten 761-768; U. HEUBNER: "Die Kornfeinung und Gefügestabilisierung von Blei und Bleilegierungen mit Hilfe von Schwefel, Selen und Tellur"
- Kirk-Othmer, Encyclopedia of Chemical Technology, 3rd Edition, Vol.14, 1981, Seiten 133, 149-151

## Beschreibung

Die Erfindung bezieht sich auf eine Blei-Calcium-Legierung und auf ein Verfahren zum Herstellen derselben.

In der letzten Zeit wurden vermehrt Blei-Calcium-Legierungen und Blei-Calcium-Zinn-Legierungen für die Herstellung von Elektrodengittern verwendet, da sie ein günstigeres Gasungsverhalten und damit geringere Selbstentladung und geringeren Wasserverbrauch beim Betrieb von modernen wartungsarmen bzw. wartungsfreien Batterien gegenüber den bisher in erster Linie üblichen Blei-Antimon-Legierungen aufweisen.

Blei-Calcium-Legierungen haben eine niedrigere, aber noch ausreichende mechanische Festigkeit für die nachfolgende Bearbeitung der Gitter als Blei-Calcium-Zinn-Legierungen.

Derartige Legierungen weisen eine bestimmte Gefügeausbildung auf, die durch stengelig ausgebildete Körner mit diskontinuierlichen Ausscheidungen von Blei-Calcium-Zinn-Verbindungen an den Korngrenzen gekennzeichnet ist. Dieses Gefüge beeinflußt die Gieß-, mechanischen und Korrosionseigenschaften der Legierungen ungünstig.

Aus der DE-PE 3131510 ist eine antimonarme - jedoch nicht antimonfreie - Bleilegierung für Elektrodengitter bekannt, bei der neben Beryllium auch die Beigabe von Kornfeinungsmitteln wie Kupfer und Schwefel erwähnt sind.

Aus der DE-PS 3203138 ist ebenfalls ein Elektrodengitter für Bleiakkumulatoren bekannt, wobei zum Erreichen einer besonders feinen Körnung in erster Linie Beryllium beigemengt wurde. Eine weitere Verfeinerung soll durch die Verbindung des Berylliums mit Kupfer, Silber, Sauerstoff, Schwefel, Tellur, Phosphor, Arsen oder Kohlenstoff erzielt werden. Es ist dort eine sogenannte Haltezeit von einigen bis zu 20 Minuten vorgesehen, d.h. die Zeit, in der die Legierung zu Bleigittern vergossen werden muß.

In der DE-OS 3045683 ist eine Blei-Calcium-Legierung zur Herstellung von Elektrodengittern beschrieben, bei der ein gewisser Prozentsatz Calcium, Wismut, Silber, beigegeben wurde. Zusätzlich ist die Beigabe von Zinn und/oder Aluminium vorgesehen.

In der DE-OS 2452842 ist schließlich eine Bleilegierung vorgesehen, die Kupfer und Zinn enthält.

Der Erfindung liegt die Aufgabe zugrunde, eine Bleilegierung so auszugestalten, daß die Gieß-, mechanischen und Korrosionseigenschaften deutlich verbessert werden.

Die Aufgabe wird erfindungsgemäß durch die Merkmale des Anspruches 1 gelöst. Weitere Ausgestaltungen der Erfindung sind in den Unteransprüchen dargestellt.

Überraschend zeigte es sich, daß eine geringfügige Beigabe von Schwefel und Kupfer zu einer derartigen Blei-Calcium-Legierung oder einer Blei-Calcium-Zinn-Legierung die genannten drei Werte deutlich verbessert. Bisher war lediglich bekannt, Kupfer und Schwefel in bestimmten Anteilen und bei bestimmten Legierungen (die allerdings immer Antimon enthalten) zur Kornfeinung einzusetzen.

Genauere Untersuchungen zeigten, daß die genannten Beigaben die Gefügeausbildung der Legierung deutlich verändert haben. Statt der stengelig ausgebildeten Körner mit diskontinuierlichen Ausscheidungen an den Korngrenzen entstand eine globulitisch erstarrte Legierung mit ganz anderen Eigenschaften, wobei die Ausscheidungen an den Korngrenzen regelmäßiger verteilt sind, was insbesondere bezüglich der Korrosionseigenschaften vorteilhaft ist.

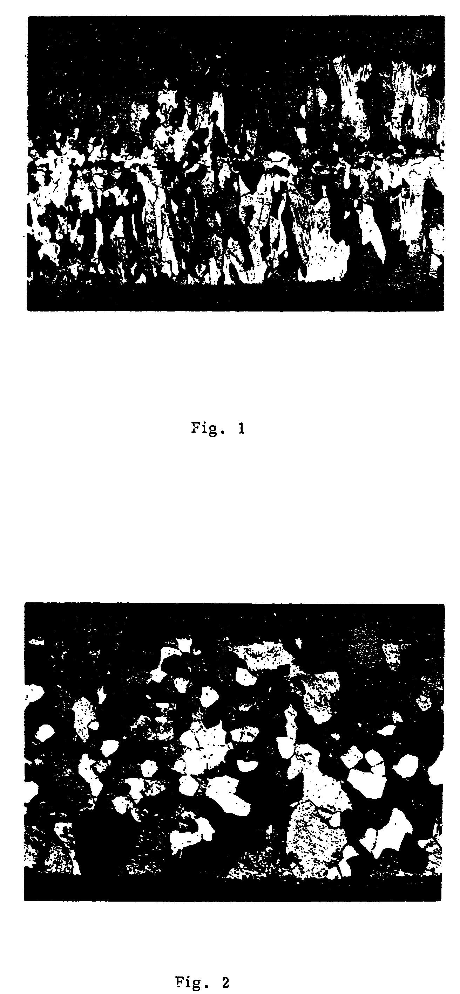

Ein Auführungsbeispiel der Erfindung wird in Figur 2 gezeigt.

Im folgenden wird ein Ausführungsbeispiel der Erfindung dargestellt.

### Beispiel:

500 Kilogramm Schmelze einer technischen Legierung PbCa 0,08 Sn 1 werden bis auf 500 ⁰ C erhitzt. Dann werden 0,02 m% Kupfer und 0,02 m% Schwefel nacheinander mit Hilfe einer Tauchglocke in die Schmelze eingebracht. Danach wird diese Schmelze mit einem Eisenstab gerührt. Während eines Zeitraumes von einigen Minuten bis maximal 15 Stunden kann danach die Schmelze in entsprechenden temperaturbeständigen Formen zu Elektrodengittern vergossen werden, ohne daß eine Veränderung in der Gefügeausbildung auftritt. Die Formtemperatur, die zunächst Zimmertemperatur betragen kann, kann während des Abgusses bis auf 300 °C ansteigen.
Figur 1 zeigt die Gefügeausbildung einer PbCa 0,08 Sn1-Legierung ohne Zusätze nach dem Stande der Technik. Es ist deutlich die stengelige Erstarrungsmorphologie zu erkennen.
Figur 2 zeigt die Gefügeausbildung einer PbCa 0,08 Sn 1-Legierung mit Zusatz von 0,02 m% Kupfer und 0,02 m% Schwefel, die nach dem im Beispiel angeführten Verfahren hergestellt wurde. hier ist eine deutliche globulitische Ausbildung zu erkennen.

Beide Figuren sind um das 20-fache vergrößert.

## Patentansprüche

1. Elektrodengitter aus einer antimonfreien Blei-Calcium- Legierung, gegebenenfalls mit 0,01 bis 5,0 m% Zinn, mit üblichen technischen Verunreinigungen sowie mit Blei als Rest,
gekennzeichnet durch
a) einen Calcium- Anteil zwischen 0,005 bis 1,Om%,
b) einen Schwefel-Anteil zwischen 0,0005 bis 5,0 m%,
c) einen Kupfer- Anteil zwischen 0,0005 bis 5,0 m%,
d) die Herstellung durch Erstarren aus einer Schmelze,
e) derart, daß das erstarrte Elektrodengitter ein globulitisches Gefüge aufweist.

2. Elektrodengitter nach Anspruch 1, dadurch gekennzeichnet, daß es 0,001 bis 0,5 m% Schwefel enthält.

3. Elektrodengitter nach Anspruch 1 oder 2, dadurch gekennzeichnet, daß Schwefel in elementarer Form beigegeben ist.

4. Elektrodengitter nach einem der Ansprüche 1 bis 3, dadurch gekennzeichnet, daß der Kupferanteil zwischen 0,001 bis 0,5 m% liegt und vorzugsweise in elementarer Form beigegeben ist.

5. Elektrodengitter nach Anspruch 4, dadurch gekennzeichnet, daß Kupfer und Schwefel als Kupfer-Schwefel - Verbindung, vorzugsweise C_{U2}S, in einer Menge von 0,0005 bis 5,0 m%, vorzugsweise 0,001 bis 0,5 m%, beigefügt ist.

6. Elektrodengitter nach einem der Ansprüche 1 bis 5, dadurch gekennzeichnet, daß es zusätzlich 0,01 bis 5,0 m% Zinn enthält.

7. Elektrodengitter nach einem der Ansprüche 1 bis 6, dadurch gekennzeichnet, daß die Temperatur der Schmelze zwischen 300 und 600°C, vorzugsweise zwischen 450 und 550°C liegt.

8. Elektrodengitter nach einem der Ansprüche 1 bis 7, gekennzeichnet durch einen Schwefelanteil und einen Kupferanteil von je 0,02 m% bei einer PbCaO,08Sn1- Legierung.

9. Elektrodengitter nach einem der Ansprüche 1-8, dadurch gekennzeichnet, daß Schwefel und Kupfer erst nach dem Erhitzen auf die Schmelz- Temperatur mit der Blei-Calcium- Legierung zusammengebracht und vermischt werden, worauf der Erstarrungsvorgang erfolgt.

10. Verfahren zur Herstellung eines Elektrodengitters gemäß einem derAnsprüche 1 bis 9 dadurch gekennzeichnet,
- daß eine Blei- Calcium- Legierung in einem hitzebeständigen Behälter auf eine Temperatur zwischen 300°C and 600°C erhitzt wird,
- daß der Schwefelanteil und der Kupferanteil anschließend in die Schmelze eingebracht wird,
- daß die neu eingebrachten Teil mit der Schmelze vermischt werden,
- daß die gemischte Schmelze innerhalb 5 Minuten bis 15 Stunden, vorzugsweise zwischen einer Stunde und 5 Stunden, zu Elektrodengittern vergossen wird, um keine Veränderung der Gefügeausbildung zu erhalten, wobei die Temperatur der Form von Zimmertemperatur bis auf 350°C ansteigen kann, und wobei ein globulitisches Gefüge erzeugt wird.

11. Verfahren nach Anspruch 10, dadurch gekennzeichnet, daß je 0,02 m% Schwefel und Kupfer in einer PbCaO,08Sn1- Legierung eingesetzt werden.

12. Verfahren nach Anspruch 10 oder 11, dadurch gekennzeichnet, daß Schwefel und Kupfer mittels einer Tauchglocke beigemengt werden.

13. Verfahren nach einem der Ansprüche 10 bis 12, dadurch gekennzeichnet, daß die Erhitzung der Blei- Calcium- Legierung auf eine Temperatur zwischen 450°C und 550°C erfolgt.

## Claims

1. Electrode grid of an antimon- free lead- calcium alloy, optionally between 0,01 and 5,0 m% of tin, usual technical impurities and the remainder being lead,
characterized by
a) a calcium content between 0,005 and 1,0 m%,
b) a sulphur content between 0,0005 and 5,0 m%,
c) a copper content between 0,0005 and 5,0 m%,
d) a manufacturing by solidification from a melt,
e) such that the solidificated electrode grid has a globulitic structure.

2. Electrode grid as claimed in claim 1, wherein the sulphur content is between 0,001 and 0,5 m%.

3. Electrode grid as claimed in claim 1 or 2, wherein sulphur is added in elemental form.

4. Electrode grid as claimed in any one of claims 1 to 3, wherein the copper content is between 0,01 and 0,5 m% and is added optionally in elemental form.

5. Electrode grid as claimed in claim 4, wherein sulphur and copper are added in the form of a copper- sulphur compound, optionally CU2S, in an amount between 0,0005 and 5,0 m%, optionally 0,001 to 0,5 m%.

6. Electrode grid as claimed in any one of claims 1 to 5, wherein it contains 0,01 to 5,0 m% of tin in addition.

7. Electrode grid as claimed in any one of claims 1 to 6, wherein the temperature of the melt is between 300 and 600°C, optionally between 450 and 550°C.

8. Electrode grid as claimed in any one of claims 1 to 7, wherein the content of sulphur and the content of copper in a PbCaO,08Sn1- alloy is each 0,02 m%.

9. Electrode grid as claimed in any one of claims 1 to 8, wherein sulphur and copper are brought together and mixed not before heating them to the melting temperature of the lead- calcium- alloy, followed by the solidification procedure.

10. Process of manufacturing an electrode grid as claimed in anyone of claims 1 to 9, characterized in
that a lead- calcium alloy in a heat- resistant vessel is heated to a temperature ranging between 300°C and 600°C,
that the sulphur proportion and the copper proportion are subsequently introduced into the melt,
that the freshly introduced components are mixed with the melt,
that the mixed melt is cast to electrode grids within a period of time ranging between 5 minutes and 15 hours, optionally between 1 hour and 5 hours, such that no change of the structural configuration takes place, wherein the temperature of the mould may increase from room temperature up to 350°C, and wherein a globulitic structure is produced.

11. Process as claimed in claim 10, wherein 0,02 m% of sulphur and as well 0,02 m% of copper are used in a PbCaO,08Sn1-alloy.

12. Process as claimed in claim 10 or 11, wherein sulphur and copper are admixed by means of a bell.

13. Process as claimed in any one of claims 10 to 12, wherein the lead-calcium alloy is heated up to a temperature between 450° to 550°C.

## Revendications

1. Grille d'électrode en alliage de plomb-calcium sans antimoine, contenant éventuellement entre 0,01 et 5,0% d'étain, avec les impuretés techniques habituelles, et le reste étant en plomb,
caractérisé par
a) une part de calcium comprise entre 0,005 et 1,0 m%,
b) une part de soufre comprise entre 0,0005 et 5,0 m%,
c) une part de cuivre comprise entre 0,0005 et 5,0 m%,
d) une fabrication par solidification de la matière en fonte
e) de telle manière que la grille d'électrode solidifiée présente une structure globulaire.

2. Grille d'électrode selon la revendication 1, caractérisée en ce que la teneur en soufre est comprise entre 0,001 et 0,5 m%.

3. Grille d'électrode selon la revendication 1 ou 2, caractérisée en ce que le soufre est ajouté sous forme élémentaire.

4. Grille d'électrode selon l'une des revendications 1 à 3, caractérisée en ce que la teneur en cuivre est comprise entre 0,001 et 0,5 m% et est ajoutée de préférence sous forme élémentaire.

5. Grille d'électrode selon la revendication 4, caractérisée en ce que la soufre et le cuivre sont ajoutés sous forme d'un composé de soufre et de cuivre, de préférence Cu2S, dans une proportion de 0,0005 à 5,0 m%, de préférence de 0,001 à 0,5 m%.

6. Grille d'électrode selon l'une des revendications 1 à 5, caractérisée en ce qu'elle contient en outre 0,01 à 5,0 m% d'étain.

7. Grille d'électrode selon l'une des revendications 1 à 6, caractérisée en ce que la température de la matière en fonte est comprise entre 300 et 600°C, de préférence entre 450 et 550°C.

8. Grille d'électrode selon l'une des revendications 1 à 7, caractérisée par une part de soufre et une part de cuivre de 0,02 m% chacune dans un alliage PbCaO,08Sn1.

9. Grille d'électrode selon l'une des revendications 1 à 8, caractérisée en ce que le soufre et le cuivre sont chauffés à la température de fusion avant d'être ajoutés et mélangés à l'alliage plomb-calcium, le tout étant alors solidifié.

10. Procédé de fabrication d'une grille d'électrode selon l'une des revendications 1 à 9, caractérisée en ce que
- on chauffe un alliage plomb-calcium dans un récipient résistant à la chaleur jusqu'à une température comprise entre 300°C et 600°C,
- la part de soufre et la part de cuivre sont alors ajoutées à la matière en fonte,
- que les parties ajoutées sont mélangées avec la matière en fonte,
- que les matières en fonte mélangées sont coulées dans les moules de grille d'électrode après un délai compris entre 5 minutes et 15 heures, de préférence entre 1 et 5 heures, pour empêcher une modification de structure, la température du moule pouvant passer de la température ambiante à 350°C, en produisant une structure globulaire.

11. Procédé selon la revendication 10, caractérisée par l'addition de 0,02 m% de soufre et 0,02 m% de cuivre sont ajoutés à un alliage PbCaO,08Sn1.

12. Procédé selon la revendication 10 ou 11, caractérisée en ce que l'addition de soufre et de cuivre est effectuée à l'aide d'une cloche à immersion.

13. Procédé selon l'une des revendications 10 à 12, caractérisée en ce que l'alliage plomb-calcium est chauffé à une température comprise entre 450 et 550°C.
